Europäisches Patentamt

European Patent Office

Office européen des brevets

(19)

(11) Numéro de publication : **0 481 847 B1**

(12) **FASCICULE DE BREVET EUROPEEN**

(45) Date de publication du fascicule du brevet :
**06.09.95 Bulletin 95/36**

(51) Int. Cl.⁶ : **H04J 3/07**

(21) Numéro de dépôt : **91402685.1**

(22) Date de dépôt : **08.10.91**

(54) **Dispositif de réduction de la gigue due aux sauts de pointeurs dans un réseau de télécommunications numériques.**

(30) Priorité : **17.10.90 FR 9012802**

(43) Date de publication de la demande :
**22.04.92 Bulletin 92/17**

(45) Mention de la délivrance du brevet :
**06.09.95 Bulletin 95/36**

(84) Etats contractants désignés :
**BE DE ES GB IT NL**

(56) Documents cités :
**FR-A- 2 594 277**
**BRITISH TELECOM : CONTRIBUTION TO T1 STANDARDS PROJECT 8 February 1989,LONDON,GB pages 1-10; ANDY RAID: 'SONET DESYNCHRONISERS'**
**PATENT ABSTRACTS OF JAPAN vol. 5, no. 74 (E-57)(746) 16 May 1981; & JP-A-56 021440 (FUJITSU) 27 February 1981.**

(73) Titulaire : **SAT (Société Anonyme de Télécommunications) Société Anonyme française**
**58B rue du dessous des Berges, B.P. 326**
**F-75625 Paris Cédex 13 (FR)**

(72) Inventeur : **Sari, Hikmet**
**25 Square Edison**
**F-94000 Creteil (FR)**
Inventeur : **Karam, Georges Michel**
**17 Boulevard Lefebvre**
**F-75015 Paris (FR)**

(74) Mandataire : **Bloch, Gérard et al**
**2, square de l'Avenue du Bois**
**F-75116 Paris (FR)**

## Description

La présente invention a pour objet un dispositif de réduction de la gigue due aux sauts de pointeur dans un réseau de télécommunications numériques.

Elle trouve notamment son application pour les réseaux basés sur la hiérarchie synchrone, connue de l'homme du métier sous le nom de S.D.H. (de l'anglais "Synchronous Digital Hierarchy"). Dans un tel réseau, il est prévu d'utiliser, en différents noeuds du réseau, des horloges synchronisées par une ou plusieurs horloges atomiques afin de leur conférer une très bonne stabilité, par exemple de l'ordre de $10^{-11}$. Cependant, cette stabilité n'est pas parfaite et il subsiste, entre les horloges des différents noeuds, des différences de phases et de fréquence dont il faut s'accomoder sans perdre d'informations utiles. Ce rôle est dévolu aux sauts de pointeurs. Lorsque la différence de phase entre un signal arrivant à un noeud et l'horloge locale qui sert à régénérer ce signal dépasse un certain seuil, un saut de pointeur positif ou négatif est effectué pour recaler les signaux en phase.

Pour comprendre ce qu'est un saut de pointeur, il faut savoir que le signal utile est véhiculé dans des trames. Une trame est un groupe d'éléments binaires, ou bits, en nombre déterminé, qu'il est commode de représenter sous forme d'un bloc d'octets comprenant un nombre déterminé de rangées ou lignes, chaque ligne comprenant à son tour un nombre déterminé d'octets. Par exemple, dans le cas du signal STM-1 (de l'anglais "Synchronous Transport Module - Level 1") défini par le C.C.I.T.T., une trame contient 19440 bits, agencés en 9 lignes de 270 octets chacune. Parmi les octets d'une trame, tous ne servent pas à véhiculer des informations utiles, un certain nombre d'entre eux étant utilisés pour le contrôle et la commande de la transmission. Par exemple, dans la trame STM-1 prise pour exemple, chaque ligne commence par 9 octets de contrôle et de commande, appelés octets SOH (de l'anglais "Section Overhead"), suivis d'un octet appelé POH (de l'anglais "Path Overhead"), puis de 260 octets que l'on peut diviser en 20 zones comprenant 13 octets chacune. Chacune de ces 20 zones comprend 12 octets d'information utile et 1 octet du type W, X, Y ou Z, en utilisant la terminologie du C.C.I.T.T.. Un octet W comprend 8 bits d'information utile, un octet X ou Y ne porte pas de bits d'information utile et un octet Z porte 6 ou 7 bits d'information utile. Dans la suite de cet exposé, et malgré ce qui vient d'être indiqué, on considèrera cependant que les 261 octets qui suivent les 9 octets SOH sont des octets d'information utile. Ceci permettra de simplifier l'exposé sans nuire à sa généralité.

En adoptant la convention précédente, une trame transporte donc 9x261, soit 2349, octets d'information utile, et 9x9, soit 81, octets SOH de contrôle et de commande. Parmi ces derniers, 3 octets sont cependant réservés au transport d'informations utiles supplémentaires, si cela est rendu nécessaire par le mécanisme des sauts de pointeurs.

En effet, comme cela a été indiqué, un saut de pointeur peut être positif ou négatif, pour assurer un recalage de phase correct quelque soit le signe du décalage de phase à l'origine du saut de pointeur.

Un saut de pointeur positif affectant une trame signifie que cette trame transporte un nombre d'octets d'information utile inférieur au nombre d'octets d'information utile d'une trame normale, non affectée par un saut de pointeur. Dans le signal STM-1 pris comme exemple, tout saut de pointeur, positif ou négatif, à une amplitude fixée à 3 octets, soit 24 bits. Une trame affectée d'un saut de pointeur positif transporte donc seulement 2346 octets d'information utile, puisqu'une trame sans saut de pointeur en transporte 2349. La place réservée dans la trame aux trois octets manquants d'information utile est remplie par 3 octets de bourrage.

Un saut de pointeur négatif affectant une trame signifie que cette trame transporte un nombre d'octets d'information utile supérieur au nombre d'octets d'information utile d'une trame normale. Dans le signal STM-1, une trame affectée d'un saut de pointeur négatif transporte donc 2352 octets d'information utile, puisqu'une trame sans saut de pointeur en transporte 2349. Comme, dans une trame, il est prévu à priori seulement 2349 octets destinés au transport des informations utiles, il faut dans ce cas faire déborder les informations utiles sur les informations de contrôle et de commande en utilisant les 3 octets de contrôle et de commande qui ont été réservés et dont il a déjà été question.

Pour le traitement et la régénération des informations utiles véhiculées par un signal transmis à travers le réseau, il est prévu, de façon connue, d'engendrer, à partir de ce signal, un signal de données et un signal d'horloge. Toujours de façon connue, il est également prévu d'éliminer du signal d'horloge les transitions qui indiquent les bits de contrôle et de commande, afin de disposer d'un signal d'horloge modifié dont les transitions n'indiquent que des bits d'information utile. Un tel signal d'horloge modifié permet par exemple, lorsqu'il est appliqué à l'entrée de commande d'écriture d'une mémoire pourvue d'une entrée recevant le signal de données, de ne mémoriser dans cette mémoire que les bits d'information utile en ignorant les bits de contrôle et de commande. Dans la suite de l'exposé, on appelera ce signal d'horloge modifié horloge d'écriture.

L'horloge d'écriture se présente donc à priori sous la forme de salves comprenant chacune une pluralité de coups d'horloge, séparées par des paliers ne comportant aucun coup d'horloge. Les salves de coups d'horloge correspondent aux bits d'information utile du signal transmis, tandis que les paliers correspondent aux bits de contrôle et de commande de ce signal transmis. En principe, chaque trame est transmise ligne par ligne. Dans le cas du signal STM-1 pris comme exemple, et conformément à la présentation simplifiée qui en est faite ici, chaque ligne comprend normalement d'abord 9 octets SOH de contrôle et de commande, suivis de 261 octets d'information utile. Le signal d'horloge d'écriture comprend donc normalement des paliers d'une durée correspondant à 9 octets, soit 72 bits, qui séparent des salves comprenant autant de coups d'horloge que de bits d'information utile par ligne, soit ici 2088 coups d'horloge.

Ceci est vrai pour toutes les lignes des trames non affectées par un saut de pointeur. Toutefois dès qu'un saut de pointeur a lieu pour une trame, celle-ci comprend une ligne dans laquelle le nombre de bits d'information utile n'est pas égal à 2088. Il en résulte, pour la partie du signal d'horloge d'écriture correspondant à cette ligne, soit un allongement du palier suivi d'un raccourcissement de la salve suivante, soit un raccourcissement du palier suivi d'un allongement de la salve suivante.

Pour un saut de pointeur positif dans une trame d'un signal STM-1, le palier est de 96 bits au lieu de 72 bits, car les 24 premiers bits normalement affectés aux informations utiles de la ligne sont dans ce cas des bits de bourrage qui n'ont pas à être traités et mémorisés. La salve suivante comprend alors 2064 coups d'horloge au lieu de 2088.

Pour un saut de pointeur négatif dans une trame d'un signal STM-1, le palier est de 48 bits au lieu de 72 bits, car les 24 derniers bits normalement affectés au contrôle et à la commande sont dans ce cas des bits d'information utile qu'il faut traiter et mémoriser. La salve suivante comprend alors 2112 coups d'horloge au lieu de 2088.

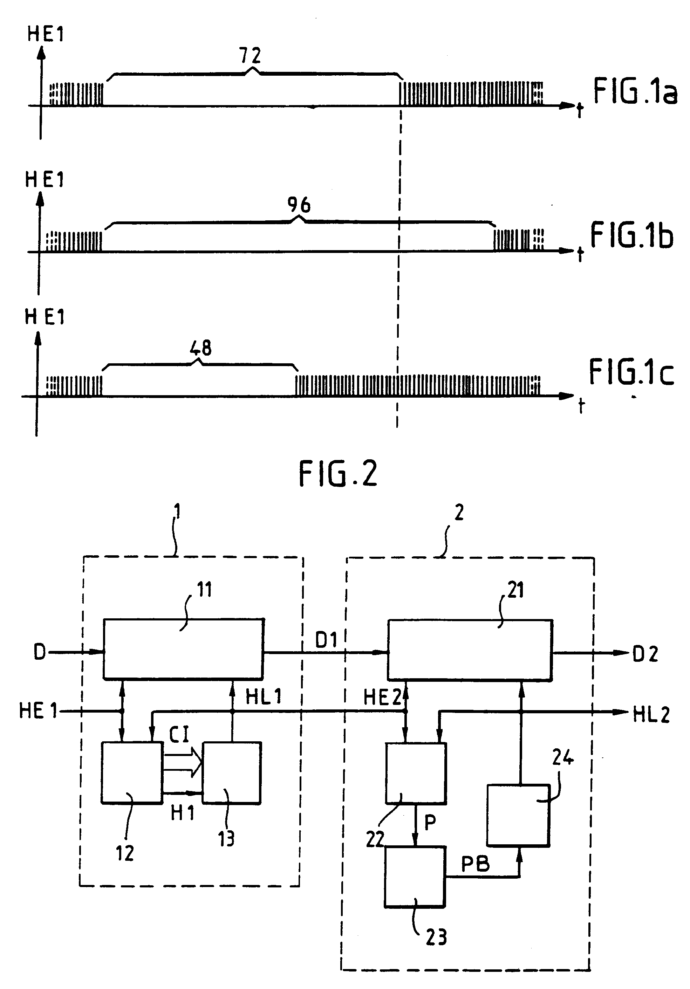

La figure 1a représente, à titre d'exemple, un palier de 72 périodes d'horloge, correspondant au début d'une ligne d'une trame STM-1 non affectée de saut de pointeur, ou encore d'une ligne autre que la quatrième d'une trame affectée d'un saut de pointeur. En effet, un saut de pointeur ne modifie qu'une seule ligne de la trame qu'il affecte, la quatrième pour une trame STM-1. La figure 1b représente un palier de 96 périodes d'horloge, correspondant au début de la quatrième ligne d'une trame affectée d'un saut de pointeur positif, tandis que la figure 1c représente un palier de 48 périodes d'horloge, correspondant au début de la quatrième ligne d'une trame affectée d'un saut de pointeur négatif.

Il est clair que les fluctuations de la durée des paliers et des salves de l'horloge d'écriture sont à l'origine d'une gigue sur le signal régénéré, par exemple, gigue qu'il importe au moins, à défaut de pouvoir l'éliminer totalement, de maintenir aussi faible que possible, pour le bon fonctionnement du réseau.

Il est clair également qu'il en est ainsi non seulement pour le signal STM-1 pris ici comme exemple, mais également pour de très nombreux signaux pour lesquels est prévu un mécanisme de sauts de pointeurs, quelles que soient l'amplitude et la fréquence des sauts de phase impliqués par l'apparition des sauts de pointeurs.

Pour réduire la gigue, il est connu d'utiliser un circuit, appelé "désynchroniseur" par l'homme du métier, qui comprend une boucle à verrouillage de phase utilisée pour filtrer le signal d'horloge d'écriture. De façon connue également, un tel désynchroniseur comprend aussi une mémoire tampon dans laquelle sont écrites les données au rythme de l'horloge d'écriture. Les données ainsi mémorisées dans la mémoire tampon sont lues au rythme de l'horloge d'écriture filtrée dans la boucle à verrouillage de phase, horloge filtrée appelée en conséquence horloge de lecture.

Le cas échéant, il est prévu, en amont du désynchroniseur précédent, un circuit appelé "circuit d'écoulement de bits" par l'homme du métier. Un tel circuit est utilisé lorsque, comme cela est le cas pour le signal STM-1 pris comme exemple, un saut de phase dû à un saut de pointeur élémentaire correspond à une pluralité de bits. Le circuit d'écoulement de bits transforme chaque saut d'une pluralité de bits en autant de sauts de 1 bit, qu'il étale dans le temps pour réduire les fluctuations de phase. Par exemple, dans le signal STM-1, on a vu que chaque saut de phase correspond à 24 bits. Le circuit d'écoulement de bits transforme chaque saut de phase de 24 bits en 24 sauts de phase de un bit, qu'il écoule en séparant chaque saut du suivant par un intervalle de temps relativement grand. Cet agencement d'un circuit d'écoulement de bits suivi d'un désynchroniseur conventionnel à boucle de verrouillage de phase permet notamment, de s'accomoder l'amplitude relativement grande des sauts de phase engendrés par le mécanisme des sauts de pointeur, et de la fréquence d'apparition très faible de ceux-ci lorsque les horloges utilisées sont très stables, comme cela est prévu pour le signal STM-1.

Naturellement, le circuit d'écoulement de bits n'est pas toujours nécessaire, notamment lorsque le mécanisme des sauts de pointeur engendre uniquement des sauts de un bit, ce qui est notamment le cas dans le réseau actuel "plesiochrone", c'est-à-dire presque synchrone.

Que l'on utilise un circuit d'écoulement de bits ou non, il est clair que la quantification des sauts de phase, c'est-à-dire le fait que tout saut de phase a une amplitude d'au moins 1 bit, est à l'origine de fluctuations en sortie du désynchroniseur conventionnel, en particulier lorsque la fréquence des sauts de phase de un bit tombe dans la bande passante de la boucle de phase de ce désynchroniseur.

Les documents "Sonet desynchronisers" du 8 février 1989, et "Results of simulations of a possible desynchroniser" du 8 mai 1989, qui sont des contributions de BRITISH TELECOM (Andy Reid, Angel Centre, 403 St John Street, LONDON EC1V 4PL) à la commission de standardisation américaine T1X1, décrivent l'emploi, pour réduire les effets de la quantification des sauts de phase, d'un générateur de bruit dans un circuit d'écoulement de bits suivi d'un désynchroniseur conventionnel. Le signal de sortie de ce générateur est additionné au signal qui commande les instants où doivent être effectués les sauts de phase positifs ou négatifs dûs au mécanisme des sauts de pointeur. La présence du générateur de bruit a pour conséquence l'insertion, sur le signal d'horloge, d'une pluralité de sauts de phase positifs ou négatifs d'amplitude un bit, les sauts de phase positifs ainsi insérés étant en nombre égal, en moyenne, au nombre de sauts de phase négatifs ainsi insérés. Ces sauts de phase ne modifient donc pas la variation à long terme de la phase, qui reste celle commandée par le circuit d'écoulement des bits, mais du fait qu'ils sont insérés notamment au voisinage de chaque saut de phase à écouler, ils sont à l'origine d'un lissage qui apparaît après filtrage dans le désynchroniseur conventionnel.

Dans ce dispositif connu, le bruit est triangulaire ou en dents de scie, et sa fréquence doit être aussi décorrélée que possible de la fréquence trame. Ceci nécessite l'utilisation soit d'un oscillateur séparé, soit d'un circuit relativement complexe pour engendrer une fréquence adéquate pour le bruit, à partir de la fréquence trame.

La présente invention vise à pallier ces inconvénients, en procurant un dispositif dans lequel les effets de la quantification des sauts de phase sont réduits grâce à des sauts de lissage, mais qui ne nécessite pas la génération d'une fréquence aussi décorrélée que possible de la fréquence trame.

A cet effet, elle a pour objet un dispositif de réduction de la gigue due aux sauts de pointeur dans un réseau de télécommunications numériques, chaque saut de pointeur ayant pour conséquence au moins un saut de phase d'amplitude au moins un bit affectant un signal d'horloge, comprenant :

- des moyens d'insertion pour insérer ledit saut de phase dû au saut de pointeur sur ledit signal d'horloge, et au voisinage de ce saut de phase, une pluralité de sauts de phases de lissage positifs et négatifs, le nombre de sauts de phase de lissage positifs étant en moyenne égal à celui des sauts de phase de lissage négatifs, et,
- des moyens de filtrage, pour filtrer le signal d'horloge ainsi pourvu des sauts de phases précédents, et réduire ainsi les effets de la quantification dudit saut de phase dû au saut de pointeur,

dispositif caractérisé par le fait que :

- il comprend des moyens de commande pour affecter une durée déterminée à l'insertion dudit saut de phase dû au saut de pointeur et pour décomposer cette durée déterminée en une pluralité de durées correspondant chacune à la transmission d'un groupe de bits, et
- lesdits moyens d'insertion insèrent, sur le signal d'horloge correspondant à chacun desdits groupes de bits, soit un saut de phase positif, soit aucun saut de phase, soit un saut de phase négatif selon qu'une loi binaire de lissage présente une transition dans un sens, aucune transition, ou une transition dans l'autre sens, ladite loi binaire étant définie sur ladite durée déterminée, et présentant des transitions en nombre suffisant pour que sa moyenne locale varie progressivement depuis l'une des deux valeurs possibles de ladite loi binaire jusqu'à l'autre des deux valeurs possibles, le sens de ces variations étant lié au signe dudit saut de phase dû au saut de pointeur.

Dans le dispositif de l'invention, l'insertion des sauts de phase de lissage se fait selon une loi de lissage, ou motif de lissage, déterministe qui est mémorisée, et ne nécessite pas la génération d'un signal décorrélé comme dans le dispositif connu. De plus, et comme cela sera mieux compris dans la suite, l'allure du motif de lissage permet une élimination presque parfaite de l'effet de la quantification des sauts de phase.

Les groupes de bits dont il a été question sont soit des trames, ce qui simplifie le dispositif puisque le signal est véhiculé sous forme d'une suite de trames, soit des rangées, ou lignes, appartenant à ces trames, ce qui réduit la durée affectée à l'insertion de chaque saut de phase, dans le cas où ces derniers sont relativement rapprochés dans le temps.

Avantageusement, lorsque chaque saut de pointeur a pour conséquence un saut de phase d'amplitude correspondant à une pluralité de bits, lesdits moyens de commande décomposent ledit saut de phase en une pluralité de sauts de phases élémentaires dont ils augmentent ou réduisent la vitesse d'insertion sur le signal d'horloge de façon adaptée à la fréquence d'apparition des sauts de pointeurs.

Par rapport au cas connu par l'homme du métier sous le nom "écoulement fixe", pour lequel l'intervalle de temps et l'amplitude de chacun des sauts de phase élémentaires sont fixés d'avance, les caractéristiques ci-dessus permettent un fonctionnement satisfaisant, que le réseau soit en régime normal ou en régime dégradé. Par régime normal, on entend ici un régime dans lequel toutes les horloges locales sont synchronisées, tandis que par régime dégradé on entend un régime dans lequel une horloge locale perd accidentellement son synchronisme, c'est-à-dire n'est plus synchronisée par l'horloge atomique dont il a été question. En régime normal, les sauts de pointeurs sont rares et on a intérêt à avoir une vitesse d'insertion, ou vitesse d'écoulement, relativement basse, car la gigue résiduelle est une fonction croissante de la vitesse d'insertion. En régime dégradé, la stabilité de l'horloge qui a perdu son synchronisme étant beaucoup moins bonne qu'en régime normal, par exemple $10^{-5}$ à $10^{-6}$ en régime dégradé contre $10^{-11}$ en régime normal, on tolère une gigue résiduelle plus importante qu'en régime normal, à condition cependant de ne pas perdre d'informations utiles. Ceci suppose une vitesse d'insertion assez élevée, car les sauts de pointeurs sont relativement fréquents en régime dégradé. Dans le dispositif de l'invention, la vitesse d'insertion varie en accord avec la fréquence d'apparition des sauts de pointeurs, de façon à obtenir une gigue résiduelle aussi faible que possible en régime normal, sans perdre d'informations utiles en régime dégradé. Ce résultat ne peut être obtenu avec une vitesse d'insertion fixe, car si la valeur de celle-ci est élevée, on obtient une gigue résiduelle importante en régime normal, et si cette valeur est faible, on perd des informations utiles en régime dégradé.

Selon le cas, pour augmenter ou diminuer la vitesse d'insertion, lesdits moyens de commande augmentent ou réduisent l'amplitude de chacun des sauts de phase élémentaires, ou la durée affectée à l'insertion de chacun d'entre eux.

Dans une forme de réalisation, lesdits moyens de commande augmentent la vitesse d'insertion lorsqu'un saut de phase dû à un saut de pointeur, de même signe que le précédent, se produit avant que la durée nécessaire à l'insertion de ce saut de phase précédent ne soit écoulée, et réduisent la vitesse d'insertion dans le cas contraire.

Dans une autre forme de réalisation, lesdits moyens de commande déterminent la durée d'un intervalle de temps au cours duquel les N derniers sauts de pointeur se sont produits, N étant un entier naturel, et augmentent ou diminuent la vitesse d'insertion en réponse à la valeur de cette durée.

Dans ce cas, la réaction du circuit à, par exemple, un décrochage d'une horloge d'un noeud du réseau est relativement rapide, et permet d'établir très vite la vitesse d'insertion à sa bonne valeur. De plus, dans le cas d'un saut de pointeur double, ou triple, la vitesse d'insertion n'augmente pas systématiquement.

Avantageusement, il est prévu une mémoire tampon pour mémoriser les informations utiles pendant le traitement du signal d'horloge destiné à en réduire la gigue, les données utiles étant écrites au rythme du signal d'horloge avant traitement et lues au rythme du signal d'horloge après traitement, et les moyens de commande simulent le remplissage de la mémoire tampon et augmentent ou diminuent la vitesse d'insertion pour maintenir ce remplissage à une valeur intermédiaire.

Tout risque de débordement de la mémoire tampon est ainsi évité.

Dans encore une autre forme de réalisation, lesdits moyens de commande comprennent un comparateur de phase, pour comparer la phase du signal d'horloge avant le traitement destiné à en réduire la gigue à la phase du signal d'horloge après ledit traitement, un filtre pour filtrer le signal en sortie dudit comparateur de phase, des moyens intégrateurs pour intégrer, sur une certaine durée, le signal en sortie dudit filtre et des moyens de décision pour commander l'insertion de sauts de phase en réponse au signal en sortie de l'intégrateur.

Dans ce cas, il est avantageux que ledit filtre comprenne un chemin direct entre son entrée et sa sortie.

En effet, cette caractéristique permet d'obtenir à la fois une gigue résiduelle faible en régime normal et la compensation de grands écarts de fréquence en régime dégradé tout en garantissant une faible erreur de phase statique, ce qui équivaut à une bonne utilisation de la mémoire tampon.

La présente invention sera mieux comprise à la lecture de la description suivante de plusieurs formes de réalisation préférées d'un dispositif de réduction de gigue conforme à l'invention, faite en se référant aux dessins annexés, sur lesquels :

- les figures 1a, 1b et 1c représentent des diagrammes temporels de signaux d'horloge affectés de sauts de phase dûs à des sauts de pointeur dans un réseau de télécommunications numériques, diagrammes temporels qui ont déjà été commentés,
- la figure 2 représente un schéma par blocs d'un circuit de réduction de gigue conforme à l'invention, circuit qui traite, entre autres, les signaux de la figure 1,
- la figure 3 représente un schéma plus détaillé du circuit de commande faisant partie du circuit de réduction de gigue de la figure 2,
- la figure 4 représente un schéma plus détaillé du circuit d'insertion de sauts de phases faisant partie du circuit de réduction de gigue de la figure 2,
- la figure 5 représente les variations temporelles de la phase du signal d'horloge en sortie du circuit d'insertion de sauts de phase de la figure 4, ainsi qu'un motif de lissage utilisé par ce circuit,
- les figures 6a et 6b représentent des variantes du motif de lissage de la figure 5,
- la figure 7 représente une variante de réalisation du circuit de commande de la figure 3, et
- la figure 8 représente un schéma plus détaillé du filtre du circuit de commande de la figure 7.

En se référant à la figure 2, un circuit de réduction de la gigue due aux sauts de pointeur dans un réseau de télécommunications numériques est maintenant décrit.

Comme cela a déjà été indiqué, un tel circuit comprend ici un "circuit d'écoulement de bits" 1 et un "désynchroniseur" 2.

Le circuit 1 comprend une mémoire tampon 11, un circuit de commande 12 et un circuit 13 d'insertion de sauts de phase.

La mémoire tampon 11 est pourvue d'une entrée d'écriture recevant un signal de données D, d'une entrée d'horloge d'écriture recevant un signal binaire HE1 ou horloge d'écriture, d'une sortie de lecture délivrant un signal de données D1 et d'une entrée d'horloge de lecture recevant un signal binaire HL1 ou horloge de lecture.

Le circuit de commande 12 est pourvu de deux entrées binaires recevant respectivement l'horloge d'écriture HE1 et l'horloge de lecture HL1, d'une sortie binaire délivrant un signal H1 ou horloge auxiliaire et d'une sortie numérique délivrant un signal CI de commande d'insertion.

Le circuit d'insertion 13 est pourvu d'une entrée numérique recevant le signal CI, d'une entrée binaire recevant le signal H1 et d'une sortie binaire délivrant le signal HL1.

Le désynchroniseur 2 comprend, de façon connue, une mémoire tampon 21, un comparateur de phase analogique 22, un filtre passe-bas 23 et un oscillateur commandable en tension 24.

La mémoire tampon 21 est pourvue d'une entrée d'écriture recevant le signal de données D1 en sortie de la mémoire tampon 11, d'une entrée d'horloge d'écriture recevant un signal binaire HE2 ou horloge d'écriture qui n'est autre que le signal HL1, d'une sortie de lecture délivrant un signal de données D2 et d'une entrée d'horloge de lecture recevant un signal binaire HL2 ou horloge de lecture.

Le comparateur de phase 22 est pourvu de deux entrées binaires recevant respectivement l'horloge d'écriture HE2 et l'horloge de lecture HL2, et d'une sortie analogique délivrant un signal P proportionnel à la phase relative de ses signaux d'entrées.

Le filtre passe-bas 23 est pourvu d'une entrée analogique recevant le signal P et d'une sortie analogique délivrant un signal PB.

L'oscillateur 24 est pourvu d'une entrée de commande recevant le signal PB et d'une sortie binaire délivrant l'horloge de lecture HL2.

Le comparateur 22, le filtre 23 et l'oscillateur 24 forment ainsi une boucle à verrouillage de phase classique. Dans le cas du signal STM-1 pris pour exemple, cette boucle est du second ordre avec des pôles dans la gamme de 100 à 1000 Hz.

Le signal de données D et l'horloge d'écriture HE1 sont élaborés dans des circuits en amont du circuit 1, non représentés car du type connu. En particulier l'horloge d'écriture HE1 est obtenue à partir du signal reçu en provenance du réseau, à l'aide d'un circuit de récupération d'horloge et de suppression des coups d'horloges correspondant aux bits du signal reçu prévus pour le contrôle et la commande de la transmission. Le signal HE1 est donc conforme aux figures 1a, 1b et 1c.

De même, dans un souci de simplicité, les circuits en aval du désynchroniseur 2, destinés à utiliser le signal de données D2 et l'horloge HL2, ne sont pas représentés.

Avant de décrire, de façon plus détaillée, le circuit de commande 12 et le circuit d'insertion 13, le fonctionnement global du circuit de la figure 2 est abordé.

La mémoire tampon 11 a pour fonction la mémorisation des bits d'information utile du signal D pendant le traitement de l'horloge d'écriture HE1 en vue de la réduction de la gigue. Les données d'information utiles sont inscrites dans la mémoire tampon 11 au rythme de l'horloge d'écriture HE1 et elles sont lues au rythme de l'horloge de lecture HL1. La taille de la mémoire tampon 11 est suffisante pour pouvoir absorber plusieurs sauts de pointeurs très rapprochés.

Lorsqu'un saut de pointeur se produit, ayant pour conséquence, toujours dans le cas du signal STM-1 pris comme exemple, un saut de phase positif ou négatif d'amplitude égale à 24 bits qui affecte le signal HE1, comme représenté sur les figures 1b ou 1c, le circuit de commande détecte ce saut de phase, puisqu'il reçoit en permanence les horloges HE1 et HL1.

Le circuit de commande décompose alors ce saut de phase de 24 bits en une pluralité de sauts de phases élémentaires, par exemple ici en 24 sauts élémentaires de un bit et commande au circuit d'insertion 13, par l'intermédiaire du signal CI, l'insertion de ces sauts élémentaires sur l'horloge auxiliaire H1.

L'horloge auxiliaire H1 est élaborée par le circuit de commande 12 à partir de l'horloge d'écriture HE1 pour en supprimer les sauts de phases dûs aux sauts de pointeurs. En effet, comme cela a été indiqué dans l'exemple décrit, l'horloge d'écriture HE1 comprend une majeure partie de salves de 2088 coups d'horloge séparées par des paliers de 72 coups d'horloge analogues à celui de la figure 1a. En cas de saut de pointeur positif, il apparaît sur le signal HE1 un palier de 96 coups d'horloge comme celui de la figure 1b, suivi d'une salve de 2064 coups d'horloge. En cas de saut de pointeur négatif, il apparaît sur le signal HE1 un palier de 48 coups d'horloge comme celui de la figure 1c, suivi d'une salve de 2112 coups d'horloge.

La suppression des sauts de phases sur l'horloge d'écriture HE1 pour obtenir l'horloge auxiliaire H1 revient à remplacer, sur l'horloge d'écriture HE1, chaque palier de 96 coups d'horloge suivi d'une salve de 2064 coups d'horloge, ou chaque palier de 48 coups d'horloge suivi d'une salve de 2112 coups d'horloge par un palier de 72 coups d'horloge suivi d'une salve de 2088 coups d'horloge. Ainsi l'horloge auxiliaire H1 est-elle une horloge idéale, non affectée de gigue, puisqu'elle ne comporte que des paliers tous égaux entre eux, suivis de salves tous égales entre elles.

Le circuit d'insertion 13 insère sur l'horloge auxiliaire "idéale" H1 les sauts de phases élémentaires de un bit aux instants déterminés par le circuit de commande 12. De plus, et conformément à l'invention, l'insertion de chaque saut de phase élémentaire est faite en ajoutant, à son voisinage, une pluralité de sauts de phase de lissage conformément à une loi, ou motif de lissage, comme cela sera mieux exposé dans la suite.

Le désynchroniseur 2 à boucle de phase fonctionne, de façon connue, pour filtrer, dans la boucle de phase, l'horloge HE2, c'est-à-dire l'horloge HL1, afin d'une part d'éliminer la gigue systématique liée à l'organisation en trames, et d'autre part de réduire les effets de la quantification de chaque saut de phase élémentaire accompagné des sauts de phase de lissage.

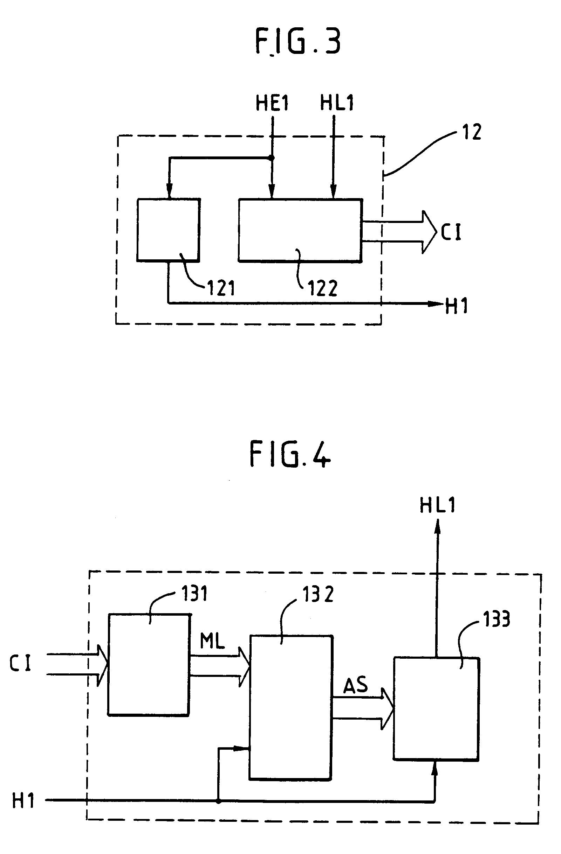

En se référant maintenant à la figure 3, une première forme de réalisation du circuit de commande 12 est maintenant décrite.

Dans cette forme de réalisation, le circuit de commande 12 comprend un circuit 121 de suppression des sauts de phases et un circuit de calcul 122.

Le circuit 121 est pourvu d'une entrée binaire recevant l'horloge d'écriture HE1 et d'une sortie binaire délivrant l'horloge auxiliaire H1. Il fait donc subir à l'horloge d'écriture HE1 les transformations nécessaires, qui ont déjà été décrites, pour obtenir l'horloge auxiliaire idéale H1. Le circuit 121 est à la portée de l'homme du métier et ne sera pas davantage décrit.

Le circuit de calcul 122 est pourvu de deux entrées binaires recevant respectivement les horloges HE1 et HL1 et d'une sortie numérique délivrant le signal CI de commande d'insertion.

Le fonctionnement du circuit de calcul 122 est le suivant. Du fait qu'il reçoit les horloges HE1 et HL1, il est à même de détecter tout saut de pointeur, ainsi que la fréquence d'apparition de ces sauts. Lorsqu'il détecte un saut de phase dû à un saut de pointeur sur l'horloge HE1, par exemple un saut de phase d'amplitude 24 bits, le circuit 122 le décompose, comme on l'a vu, en une pluralité de sauts élémentaires, par exemple 24 sauts de un bit. Le circuit 122 affecte ensuite une durée déterminée, par exemple celle nécessaire à la transmission de M trames, à l'insertion de chaque saut de phase élémentaire, en vue de permettre, comme cela sera expliqué dans la suite, la superposition du motif de lissage. Le circuit 122 commande l'insertion, sur l'horloge auxiliaire H1 de chaque saut élémentaire, en augmentant ou réduisant la vitesse d'insertion de façon adaptée à la fréquence d'apparition des sauts de pointeurs.

Pour augmenter ou réduire la vitesse d'insertion, le circuit 122 par l'intermédiaire du signal CI, augmente ou réduit, respectivement, l'amplitude de chacun des sauts de phase élémentaires, ou réduit ou augmente, respectivement, la durée affectée à l'insertion de chacun de ces sauts de phases.

Dans une première variante, le circuit de calcul augmente la vitesse d'insertion lorsqu'un saut de phase d'ici 24 bits, dû à un saut de pointeur, de même signe que le saut de phase de 24 bits précédent se produit avant que la durée nécessaire à l'insertion de ce saut de phase précédent ne soit écoulée, et en réduisant la vitesse dans le cas contraire.

Le signal CI, qui commande l'insertion de chaque saut de phase élémentaire, indique à quel moment ce saut doit être inséré, quelle doit être son amplitude et quelle est la durée qui lui est affectée.

Par exemple, la vitesse d'insertion est initialisée à sa valeur minimale, soit un bit toutes les M trames. La vitesse d'insertion est incrémentée d'un cran chaque fois que l'on détecte un saut de pointeur avant de terminer l'écoulement des précédents. Pour ce faire, un compteur-décompteur est prévu dans le circuit 122, qui reçoit l'horloge HE1 sur son entrée de comptage et l'horloge HL1 sur son entrée de décomptage, et fournit l'erreur de phase instantanée, c'est-à-dire le nombre de sauts de phase de un bit à insérer. L'état de ce compteur est contrôlé au début et à la fin de la durée affectée à l'insertion de chaque saut de phase de 24 bits. Si l'état du compteur augmente en valeur absolue, tout en restant de même signe, sur cette durée, on augmente la vitesse d'insertion pour le saut de phase suivant. On garde la même vitesse d'insertion dans le cas contraire. La vitesse d'insertion est diminuée d'un cran chaque fois que l'état du compteur revient à zéro ou change de signe. Sans perte de généralité, on peut par exemple fixer la vitesse minimale d'insertion à 1 bit toutes les 128 trames, et les vitesses suivantes à 2, 3, ..., P bits toutes les 128 trames. Dans ce cas, seule l'amplitude des sauts de phase varie avec la vitesse d'insertion. En régime normal synchrone, cette stratégie permet d'écouler les sauts de phases à la vitesse minimale, la plupart du temps.

En régime dégradé, pour lequel une horloge d'un noeud du réseau a décroché, les sauts de pointeur sont très fréquents, et la vitesse d'insertion varie autour d'une vitesse qui permet d'écouler tous ces sauts. Une vitesse maximale de 16 bits toutes les 128 trames permet ainsi de faire face à une instabilité de 6 ppm. Pour compenser des instabilités supérieures, de plus grandes vitesses d'insertion doivent être définies de préférence en réduisant la durée affectée à chaque saut de phase élémentaire à 64, puis à 32, puis à 16 trames. Pour éliminer les possibilités de débordements dans la mémoire tampon 11, on peut définir une vitesse d'insertion très accélérée à chaque bord de celle-ci, le circuit 122 simulant le remplissage de cette mémoire, et augmentant ou diminuant la vitesse d'insertion pour maintenir ce remplissage à une valeur intermédiaire aussi proche que possible de la moitié de la capacité de la mémoire.

Il est à souligner que deux sauts de pointeur dans un signal STM-1 sont séparés d'au moins 4 trames. Si l'on se fixe de faire les insertions à la cadence de 1 bit par ligne, c'est-à-dire 9 bits par trame dans une zone de 3 octets en partant de chaque bord de la mémoire tampon 11, les possibilités de débordement seront complètement éliminées. Sans perte de généralité, on peut aussi définir 3 octets adjacents sur lesquels l'écoulement se fait à la cadence de un bit par trame.

Ceci adoucit les transitions entre la zone centrale de la mémoire et ses deux zones terminales qui viennent d'être mentionnées. La mémoire tampon 11 est ainsi décomposée en trois parties : 3 octets à chaque bord où la vitesse d'insertion est de 9 bits par trame, ensuite 3 octets adjacents de chaque côté où la vitesse d'insertion est de 1 bit par trame, et enfin, la zone centrale sur laquelle la vitesse d'insertion est variable et déterminée par le circuit de calcul 122.

Dans une deuxième variante, le circuit 122 détermine la durée de l'intervalle de temps au cours duquel les N derniers sauts de pointeur se sont produits, et augmentent ou diminuent la vitesse d'insertion en réponse à la valeur de cette durée. N est un entier naturel. Par exemple, le circuit 122 comprend un compteur qui détermine le nombre de trames dans un intervalle de temps pendant lequel on a détecté 4 ou 5 sauts successifs. A partir de cette information, le circuit 122 commande la vitesse d'insertion de façon à écouler, en moyenne, un saut de pointeur avant l'arrivée du saut suivant.

Dans la première variante du circuit 122, on ne pouvait passer d'une vitesse d'insertion qu'à une vitesse adjacente dans un sens ou dans l'autre. Dans la deuxième variante, on peut passer brutalement d'une vitesse donnée à n'importe laquelle des autres vitesses permises par le circuit. Cela permet de réagir rapidement et d'adapter la vitesse à sa bonne valeur lors d'un décrochage d'une horloge d'un noeud du réseau. Un autre avantage de ce mode de réalisation est qu'il empêche la vitesse d'augmenter lors d'un saut double ou d'un saut triple du pointeur, ce qui se produit systématiquement dans la première variante du circuit 122, sans être véritablement nécessaire. Un saut double, ou un saut triple, se produisent dans le cas où deux noeuds différents du réseau, ou trois, sont affectés de saut de pointeurs simultanés.

Dans la seconde variante comme dans la première, le circuit 122 commence à écouler, ou à insérer, les sauts élémentaires de chaque saut détecté avec la vitesse minimale d'insertion, par exemple un saut de phase d'amplitude un bit toutes les 128 trames.

La conception du circuit de calcul 122, comprenant par exemple un microprocesseur, à partir de la description qui vient d'être faite de son fonctionnement, est à la portée de l'homme du métier.

En référence maintenant à la figure 4, le circuit d'insertion 13 est maintenant décrit.

Il comprend un circuit 131 de mémorisation des motifs de lissage, un circuit 132 de détermination des sauts de lissage, et un circuit 133 de modification de l'horloge auxiliaire H1.

Le circuit 131 est pourvu d'une entrée numérique recevant le signal CI et d'une sortie numérique délivrant un signal ML représentatif d'un motif de lissage.

Le circuit 132 est pourvu d'une entrée numérique recevant le signal ML, d'une entrée binaire recevant l'horloge auxiliaire H1 et d'une sortie numérique délivrant un signal numérique AS de commande d'addition ou de suppression de coups d'horloge sur l'horloge auxiliaire H1.

Le circuit 133 est pourvu d'une entrée de commande recevant le signal AS, d'une entrée binaire recevant le signal H1 et d'une sortie binaire délivrant le signal HL1.

Le fonctionnement du circuit d'insertion 13 est maintenant décrit. Le circuit 131 reçoit, par l'intermédiaire du signal CI, l'ordre d'insérer un saut de phase élémentaire dont l'amplitude et la durée qui lui sont affectées sont spécifiées par le signal CI. En réponse à cet ordre, le circuit 131 lit, dans sa mémoire, le motif de lissage correspondant et le délivre au circuit 132 de détermination des sauts de lissage.

Comme cela sera mieux compris dans la suite, le motif de lissage, ou loi de lissage, est une loi binaire définie sur la durée affectée à l'insertion du saut de phase élémentaire, durée qui, comme on l'a vu, correspond à la durée de transmission d'un certain nombre de trames, par exemple 128, 64, 32 ou 16 trames, ou encore, lorsque la vitesse d'insertion doit être rapide, à celle d'un certain nombre de lignes.

Le circuit 132, qui reçoit l'horloge auxiliaire H1, détermine la durée affectée à chacune des trames ou à chacune des lignes. Selon le cas, pendant chacune de ces trames ou de ces lignes, la loi binaire de lissage présente soit une transition positive, soit aucune transition, soit une transition négative. Le circuit 132 commande alors l'insertion, au cours de la trame ou de la ligne correspondante, soit d'un saut de phase positif, soit d'aucun saut de phase, soit d'un saut de phase négatif. Pour ce faire, il envoie au circuit 133, par l'intermédiaire du signal AS, l'ordre de supprimer ou d'ajouter des coups d'horloge à l'horloge auxiliaire H1. Un saut de phase positif d'amplitude 3 bits se traduira par la suppression de 3 coups d'horloge de l'horloge auxiliaire H1, tandis qu'un saut de phase négatif d'amplitude 2 bits se traduira par l'addition de 2 coups d'horloge à l'horloge auxiliaire H1, pour la durée correspondant à la trame ou à la ligne considérée.

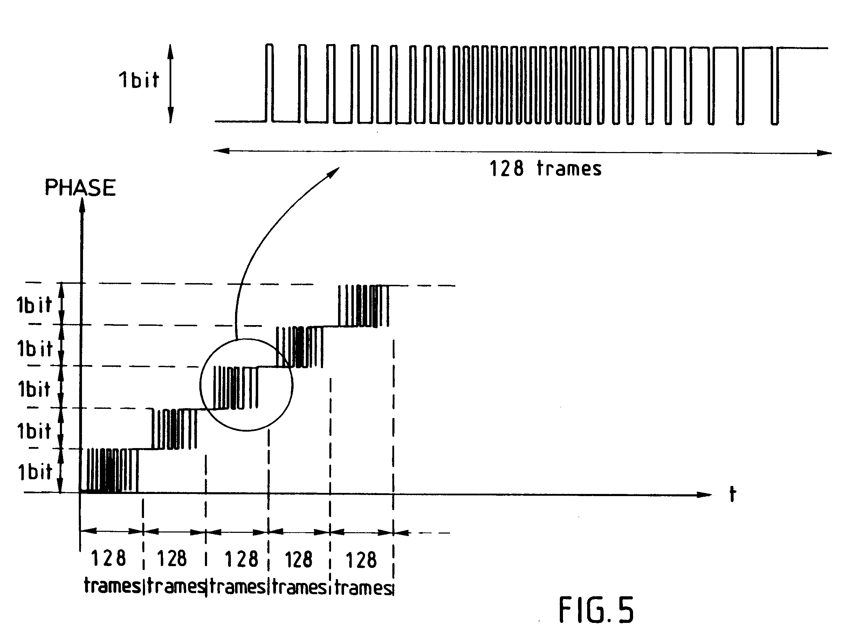

Sur la figure 5, on a représenté la variation de la phase de l'horloge HL1 dans le cas d'un saut de phase négatif de 24 bits isolé dû à un saut de pointeur. Comme cela a été expliqué, ce saut de phase est décomposé en 24 sauts de phase élémentaires d'amplitude un bit, et une durée de 128 trames est affectée à l'insertion de chacun de ces sauts élémentaires.

La figure 5 représente la variation de phase pour seulement les 5 premiers des 24 sauts élémentaires, dans un souci de simplicité. L'amplitude de chacun des sauts négatifs étant ici de 1 bit, et un saut négatif correspondant à l'addition d'un coup d'horloge, la figure 5 se présente sous la forme générale d'un escalier dont chaque marche correspond à l'insertion d'un saut de phase de 1 bit. Toutefois, il apparaît, superposé à chaque marche d'escalier, le motif de lissage ajouté par le circuit 13. Sur la figure 5, le motif correspondant à la troisième marche d'escalier est représenté plus en détail. Il apparaît que le motif de lissage déterministe, défini ici sur une durée de 128 trames, est une loi binaire qui présente, entre ses deux valeurs possibles, des transitions en nombre suffisant pour que sa moyenne locale varie progressivement depuis l'un de ses deux valeurs possibles, ici la valeur 0, jusqu'à l'autre des deux valeurs possibles, ici la valeur 1. Dans l'exemple représenté sur la figure 5, le motif de lissage comporte donc des transitions positives en nombre supérieur d'une unité à celui des transitions négatives. Le bilan du motif est donc finalement d'une transition positive, correspondant au saut de phase élémentaire de 1 bit à insérer, les autres sauts de phase étant des sauts de phase de lissage, dont l'effet se manifeste après filtrage dans le désynchroniseur conventionnel 2. Comme la densité de l'état 1, ou moyenne locale, est faible au début du motif de lissage, forte en fin du motif de lissage et sensiblement égale à celle de l'état 0 au milieu du motif de lissage, le filtrage du motif par un filtre passe-bas fournit un résultat très proche d'une droite passant par l'état 0 au début du motif et par l'état 1 en fin du motif.

En superposant un tel motif à chaque palier de la phase en escalier et en faisant un filtrage passe-bas, on obtient donc quasiment une droite ayant la même pente que l'escalier. Cela signifie que la superposition du motif de lissage a pour conséquence l'élimination de l'effet de la quantification des sauts de phase du circuit 1 d'écoulement de bits, après filtrage dans le désynchroniseur 2.

Bien entendu, dans le cas où une marche de l'escalier vaut P bits, P étant un entier naturel supérieur à 1, le motif de lissage à ajouter doit aussi avoir une amplitude de P bits de façon à obtenir un lissage de phase similaire au cas où l'écoulement se fait bit par bit.

Naturellement, si le saut de phase élémentaire à insérer est positif, le motif de lissage utilisé est symétrique de celui montré sur les figures, c'est-à-dire qu'il commence avec une moyenne locale proche de 1 pour se terminer avec une moyenne locale proche de 0.

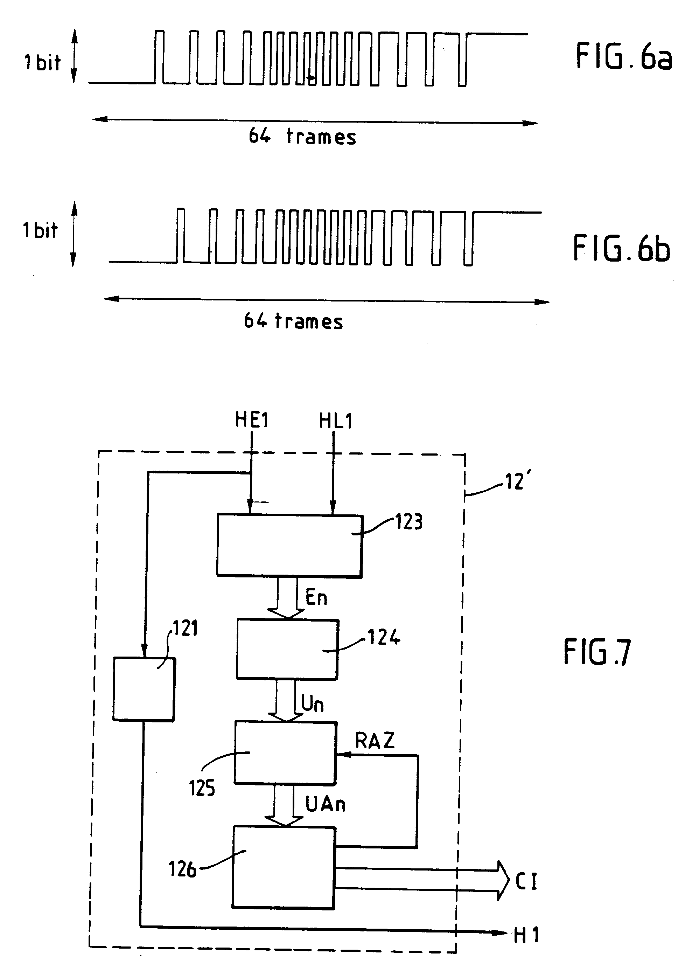

De tels motifs de lissage peuvent être construits pour d'autres vitesses d'insertion. Par exemple, les figures 6a et 6b montrent deux séquences de 64 points pour un circuit écoulant 1 bit, ou P bits, toutes les 64 trames. Comme précédemment, on suppose ici que l'insertion ou la suppression de bits se fait à la cadence trame. Le nombre de points du motif est alors le nombre de trames pendant lequel on écoule 1 bit, ou un paquet de P bits. Lorsqu'on augmente la vitesse d'insertion, chaque marche comprend moins de trames, et donc le motif moins de points. Lorsque le nombre de points dans le motif est faible, on ne peut faire un bon lissage des sauts de phase. On peut toutefois améliorer la fonction de lissage en faisant une insertion de bits à la vitesse ligne. Il y a en effet 9 lignes par trame dans l'exemple considéré. Pour une vitesse d'insertion de 1 bit, ou P bits, toutes les 16 trames, on peut ainsi construire une séquence de 16x9 = 144 points qui permet un lissage quasi-parfait des sauts de phase associés tout en conservant une vitesse d'insertion élevée.

En référence maintenant à la figure 7, une variante de réalisation 12' du circuit de commande est maintenant décrite.

Sur le schéma de la figure 7, on retrouve le circuit 121 de suppression des sauts de pointeur, identique à celui de la figure 3, qui transforme l'horloge d'écriture HE1 en horloge auxiliaire H1.

En plus du circuit 121, le circuit 12' comprend un comparateur de phase 123, un filtre numérique 124, un circuit intégrateur 125 et un circuit de comparaison et de décision 126.

Le comparateur de phase 123 est pourvu de deux entrées binaires recevant respectivement les horloges HE1 et HL1, c'est-à-dire les horloges avant et après le traitement destiné à en réduire la gigue. Le comparateur de phase 121 est également pourvu d'une sortie numérique qui délivre un signal numérique sous forme d'une suite d'échantillons numériques $E_n$ représentant chacun l'erreur de phase à un instant d'échantillonnage de rang n, n étant un entier naturel.

Le filtre 124 est pourvu d'une entrée numérique recevant le signal $E_n$ et d'une sortie numérique délivrant un signal sous forme d'une suite d'échantillons numériques $U_n$ représentant chacun l'erreur de phase filtrée.

Le circuit intégrateur 125 fait la somme de chacun des échantillons $U_n$ qu'il a reçu depuis la dernière remise à zéro qui lui est appliquée par le circuit de décision 126, par l'intermédiaire d'un signal binaire RAZ. On peut dire que le circuit 125 intègre, ou accumule, les valeurs des échantillons $U_n$, et délivre la valeur accumulée $UA_n$.

Le circuit de comparaison et de décision 126 est pourvu d'une entrée numérique recevant le signal $UA_n$, et, en plus de la sortie binaire délivrant le signal RAZ, d'une sortie numérique délivrant le signal CI de commande d'insertion.

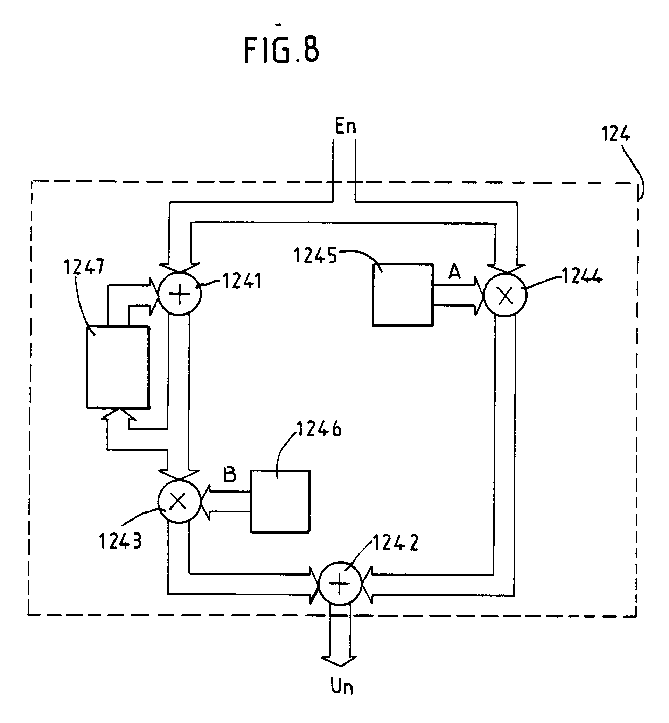

En référence maintenant à la figure 8, le filtre numérique 124 comprend deux sommateurs numériques 1241 et 1242, deux multiplicateurs numériques 1243 et 1244, deux mémoires 1245 et 1246, et un circuit retardateur d'une durée correspondant ici, et par exemple, à une période trame.

Le filtre 124 comprend d'une part un chemin direct entre l'entrée et la sortie, dans lequel chaque échantillon $E_n$ est simplement multiplié, dans le multiplicateur 1244, par une constante A stockée dans la mémoire 1245, et d'autre part un chemin passant par le sommateur 1241 et le multiplicateur 1243. Dans le sommateur 1241, chaque échantillon $U_n$ est additionné à la sortie du sommateur 1241 lors de la trame précédente, obtenu en sortie du circuit retardateur dont l'entrée est reliée à la sortie du sommateur 1241. La sortie du sommateur 1241 est multipliée, dans le multiplicateur 1243, par une constante B stockée dans la mémoire 1246. La sortie du multiplicateur 1243 et celle du multiplicateur 1244 sont sommées dans le sommateur 1242 pour donner le signal $U_n$ qui répond donc à la formule :

$$U_n = AE_n + B \sum_{k=1}^{n} E_n$$

Le fonctionnement du circuit 12' s'apparente à celui des boucles de phase numériques du second ordre, mais sans oscillateur au sens propre du terme, celui-ci étant remplacé par le circuit d'insertion de sauts de phase.

Les valeurs des constantes A et B permettent d'ajuster la bande de bruit de la pseudo-boucle de phase, ainsi que son facteur d'amortissement.

Le circuit intégrateur, ou accumulateur, 125 permet de mieux approximer le fonctionnement d'une boucle de phase numérique en s'affranchissant en partie du fait que, dans un circuit d'insertion de sauts de phase, le pas de quantification de la phase est relativement grand, puisque le saut de phase minimal correspond à une amplitude de un bit.

Par ailleurs, ici, où le circuit d'insertion 13 superpose un motif de lissage ayant une durée déterminée à chaque saut de phase élémentaire de 1 bit, et où il faut donc attendre l'écoulement de cette durée avant de pouvoir insérer un nouveau saut de phase élémentaire, le circuit intégrateur 125 permet de prendre en compte tout ce qui passe pendant la durée affectée à l'insertion de chacun des sauts de phase.

A cet effet, le circuit de comparaison et de décision 126 est agencé pour dès qu'il a commandé l'insertion d'un saut de phase, remettre à zéro le circuit 125. Dès que la durée affectée à l'insertion commandée est écoulée, le circuit 126 compare la valeur de $UA_n$ accumulée pendant cette durée à une série de seuils positifs et négatifs convenablement étagés et décide, en fonction du résultat de cette comparaison si un nouveau saut de phase doit être inséré, et si oui, avec quel signe, quelle amplitude, et quelle durée. Le circuit de décision 126 remet alors à zéro le circuit 125, et commande l'éventuel saut de phase, et ainsi de suite.

Il est à noter que le circuit de commande 12' pourrait être utilisé avec un circuit d'insertion 13 ne superposant pas de motif de lissage, la fonction de lissage étant alors dévolue à un générateur de bruit dont la sortie est additionnée à celle du circuit intégrateur 125. Dans ce cas, les sauts de phases élémentaires peuvent être insérés comme au moment où cela est nécessaire, ce qui simplifie la comparaison de la valeur accumulée $UA_n$.

Dans la description qui précède, on a toujours décrit le motif de lissage comme étant associé à chacun des sauts de phase élémentaires résultant de la décomposition d'un saut de phase d'une pluralité de bits. Naturellement, ceci n'est pas obligatoire, et le motif de lissage peut être utilisé même pour les systèmes dans lesquels les sauts de phase dûs aux sauts de pointeur étant d'amplitude plus faible, par exemple 1 bit, il n'est pas nécessaire de les décomposer en sauts élémentaires.

Par ailleurs, dans la description qui précède, on a fait apparaître des blocs, ou circuits, correspondant chacun à une fonction particulière. Il est clair que, dans une réalisation pratique, plusieurs de ces fonctions, où même la totalité d'entre elles peuvent être confiées à un unique processeur.

**Revendications**

1. Dispositif de réduction de la gigue due aux sauts de pointeur dans un réseau de télécommunications numériques, chaque saut de pointeur ayant pour conséquence au moins un saut de phase d'amplitude au moins un bit affectant un signal d'horloge (HE1), comprenant :
   - des moyens d'insertion (12, 13; 12', 13) pour insérer ledit saut de phase dû au saut de pointeur sur ledit signal d'horloge (HE1), et au voisinage de ce saut de phase, une pluralité de sauts de phases de lissage positifs et négatifs, le nombre de sauts de phase de lissage positifs étant en moyenne égal à celui des sauts de phase de lissage négatifs, et,
   - des moyens de filtrage (2), pour filtrer le signal d'horloge (HL1) ainsi pourvu des sauts de phases précédents, et réduire ainsi les effets de la quantification dudit saut de phase dû au saut de pointeur,
   dispositif caractérisé par le fait que :
   - il comprend des moyens de commande (12; 12') pour affecter une durée déterminée à l'insertion dudit saut de phase dû au saut de pointeur et pour décomposer cette durée déterminée en une pluralité de durées correspondant chacune à la transmission d'un groupe de bits, et,
   - lesdits moyens d'insertion (12, 13; 12', 13) insèrent, sur le signal d'horloge (H1) correspondant à chacun desdits groupes de bits, soit un saut de phase positif, soit aucun saut de phase, soit un saut de phase négatif selon qu'une loi binaire de lissage présente une transition dans un sens, aucune transition, ou une transition dans l'autre sens, ladite loi binaire étant définie sur ladite durée déterminée, et présentant des transitions en nombre suffisant pour que sa moyenne locale varie progressivement depuis l'une des deux valeurs possibles de ladite loi binaire jusqu'à l'autre des deux valeurs possibles, le sens de ces variations étant lié au signe dudit saut de phase dû au saut de pointeur.

2. Dispositif selon la revendication 1 dans lequel lesdits groupes de bits sont des trames.

3. Dispositif selon la revendication 1 dans lequel lesdits groupes de bits sont des rangées, ou lignes, appartenant à des trames.

4. Dispositif selon l'une des revendications 1 à 3, dans lequel, lorsque chaque saut de pointeur a pour conséquence un saut de phase d'amplitude correspondant à une pluralité de bits, lesdits moyens de commande (12; 12') décomposent ledit saut de phase en une pluralité de sauts de phase élémentaires dont ils augmentent ou réduisent la vitesse d'insertion sur le signal d'horloge (H1) de façon adaptée à la fréquence d'apparition des sauts de pointeurs.

5. Dispositif selon la revendication 4, dans lequel, pour augmenter ou réduire la vitesse d'insertion, lesdits moyens de commande (12) augmentent ou réduisent, respectivement, l'amplitude de chacun des sauts de phase élémentaires.

6. Dispositif selon l'une des revendications 4 ou 5 dans lequel, pour augmenter ou réduire la vitesse d'insertion, lesdits moyens de commande (12) réduisent ou augmentent, respectivement, la durée affectée à l'insertion de chaque saut de phase élémentaire.

7. Dispositif selon l'une des revendications 3 à 6, dans lequel lesdits moyens de commande (12) augmentent la vitesse d'insertion lorsqu'un saut de phase dû à un saut de pointeur, de même signe que le précédent, se produit avant que la durée nécessaire à l'insertion de ce saut de phase précédent ne soit écoulée, et réduisent la vitesse d'insertion dans le cas contraire.

8. Dispositif selon l'une des revendications 3 à 6, dans lequel lesdits moyens de commande (12) déterminent la durée d'un intervalle de temps au cours duquel les N derniers sauts de pointeur se sont produits, N étant un entier naturel, et augmentent ou diminuent la vitesse d'insertion en réponse à la valeur de cette durée.

9. Dispositif selon l'une des revendications 3 à 6, dans lequel il est prévu une mémoire tampon (11) pour mémoriser les informations utiles pendant le traitement du signal d'horloge destiné à en réduire la gigue, les données utiles étant écrites au rythme du signal d'horloge (HE1) avant traitement et lues au rythme du signal d'horloge (HL1) après traitement, et les moyens de commande (12) simulent le remplissage de la mémoire tampon (11) et augmentent ou diminuent la vitesse d'insertion pour maintenir ce remplissage à une valeur intermédiaire.

10. Dispositif selon l'une des revendications 1 à 6, dans lequel lesdits moyens de commande (12') comprennent un comparateur de phase (123), pour comparer la phase du signal d'horloge (HE1) avant le traitement destiné à en réduire la gigue à la phase du signal d'horloge (HL1) après ledit traitement, un filtre (124) pour filtrer le signal en sortie dudit comparateur de phase (123), des moyens intégrateurs (125) pour intégrer, sur une certaine durée, le signal en sortie dudit filtre (125) et des moyens de décision (126) pour commander l'insertion de sauts de phase en réponse au signal en sortie de l'intégrateur (125).

11. Dispositif selon la revendication 10, dans lequel ledit filtre (124) comprend un chemin direct entre son entrée et sa sortie.

**Patentansprüche**

1. Vorrichtung zur Verringerung des durch die Pointersprünge verursachten Jitters in einem digitalen Telekommunikationsnetz, wobei jeder Pointersprung mindestens einen Phasensprung mit einer Amplitude von mindestens einem Bit in einem Zeitgebersignal (HE1) zur Folge hat, umfassend:
   - Einfügungsmittel (12, 13; 12', 13), die in dieses Zeitgebersignal (HE1) diesen durch den Pointersprung verursachten Phasensprung und in Nähe dieses Phasensprungs eine Vielzahl von positiven und negativen Glättungsphasensprüngen einfügen, wobei die Anzahl von positiven Glättungsphasensprüngen im Durchschnitt gleich der der negativen Glättungsphasensprünge ist, und
   - Filtermittel (2) zum Filtern des so mit den vorhergehenden Phasensprüngen versehenen Zeitgebersignals (HL1) und dadurch zum Verringern der Wirkungen der Quantifizierung dieses durch den Pointersprung verursachten Phasensprungs,

- dadurch gekennzeichnet,
- daß sie Steuermittel (12; 12') besitzt, um der Einfügung dieses durch den Pointersprung verursachten Phasensprungs eine bestimmte Zeit zuzuweisen und um diese bestimmte Zeit in eine Vielzahl von Zeiten zu zerlegen, die jeweils der Übertragung einer Gruppe von Bits entsprechen, und
- daß diese Einfügungsmittel (12, 13; 12', 13) in das jeder dieser Bitgruppen entsprechende Zeitgebersignal (H1) je nachdem, ob ein binärer Glättungsverlauf einen Übergang in einer Richtung, keinen Übergang oder einen Übergang in der anderen Richtung aufweist, entweder einen positiven Phasensprung oder keinen Phasensprung oder einen negativen Phasensprung einfügen, wobei dieser binäre Verlauf auf dieser bestimmten Zeit definiert ist und Übergänge in einer so großen Anzahl aufweist, daß sein örtlicher Mittelwert sich progressiv von einem der beiden möglichen Werte dieses binären Verlaufs bis zu dem anderen der beiden möglichen Werte ändert, wobei die Richtung dieser Änderungen mit dem Vorzeichen dieses durch den Pointersprung verursachten Phasensprungs verbunden ist.

2. Vorrichtung nach Anspruch 1, in welcher diese Bitgruppen Blöcke sind.

3. Vorrichtung nach Anspruch 1, in welcher diese Bitgruppen zu Blöcken gehörende Spalten oder Zeilen sind.

4. Vorrichtung nach einem der Ansprüche 1 bis 3, in der, wenn jeder Pointersprung einen Phasensprung mit einer einer Vielzahl von Bits entsprechenden Amplitude zur Folge hat, diese Steuermittel (12; 12') diesen Phasensprung in eine Vielzahl von Einzelphasensprüngen zerlegen, deren Geschwindigkeit der Einfügung in das Zeitgebersignal (H1) sie auf eine an die Frequenz des Auftretens der Pointersprünge angepaßte Weise erhöhen oder verringern.

5. Vorrichtung nach Anspruch 4, in der diese Steuermittel (12) zur Erhöhung oder Verringerung der Einfügungsgeschwindigkeit die Amplitude jedes der Einzelphasensprünge erhöhen bzw. verringern.

6. Vorrichtung nach einem der Ansprüche 4 oder 5, in der die Steuermittel (12) zur Erhöhung oder Verringerung der Einfügungsgeschwindigkeit die der Einfügung jedes Einzelphasensprungs zugewiesene Zeit verringern oder erhöhen.

7. Vorrichtung nach einem der Ansprüche 3 bis 6, in der diese Steuermittel (12) die Einfügungsgeschwindigkeit erhöhen, wenn ein durch einen Pointersprung verursachter Phasensprung mit demselben Vorzeichen wie der vorhergehende auftritt, bevor die für die Einfügung dieses vorhergehenden Phasensprungs erforderliche Zeit vergangen ist, und die Einfügungsgeschwindigkeit im entgegengesetzten Fall verringern.

8. Vorrichtung nach einem der Ansprüche 3 bis 6, in der diese Steuermittel (12) die Dauer eines Zeitintervalls bestimmen, während dem die N letzten Pointersprünge aufgetreten sind, wobei N eine natürliche ganze Zahl ist, und die Einfügungsgeschwindigkeit als Reaktion auf den Wert dieser Dauer erhöhen oder verringern.

9. Vorrichtung nach einem der Ansprüche 3 bis 6, in der ein Pufferspeicher (11) zum Speichern der Nutzinformationen während der zur Verringerung des Jitters bestimmten Verarbeitung des Zeitgebersignals vorgesehen ist, wobei die Nutzdaten im Rhythmus des Zeitgebersignals (HE1) vor Verarbeitung geschrieben und im Rhythmus des Zeitgebersignals (HL1) nach Verarbeitung gelesen werden, und die Steuermittel (12) die Füllung des Pufferspeichers (11) simulieren und die Einfügungsgeschwindigkeit erhöhen oder verringern, um diese Füllung auf einem Zwischenwert zu halten.

10. Vorrichtung nach einem der Ansprüche 1 bis 6, in der diese Steuermittel (12') einen Phasenvergleicher (123) zum Vergleichen der Phase des Zeitgebersignals (HE1) vor der zur Verringerung des Jitters bestimmten Verarbeitung mit der Phase des Zeitgebersignals (HL1) nach dieser Verarbeitung, ein Filter (124) zum Filtern des Signals am Ausgang dieses Phasenvergleichers (123), Integriermittel (125) zum Integrieren des Ausgangssignals dieses Filters (125) auf einer gewissen Zeit und Entscheidungsmittel (126) zum Auslösen der Einfügung von Phasensprüngen als Antwort auf des Ausgangssignal des Integrators (125) umfassen.

11. Vorrichtung nach Anspruch 10, in der dieses Filter (124) zwischen seinem Eingang und seinem Ausgang einen direkten Weg aufweist.

## Claims

1. Device for reducing the jitter due to pointer jumps in a digital telecommunication network, each pointer jump resulting in at least one amplitude phase jump of at least one bit affecting a clock signal (HE1), comprising:
   - insertion means (12, 13; 12', 13) to insert the said phase jump due to the pointer jump into the said clock signal (HE1) and, in the proximity of this phase jump, a plurality of positive and negative smoothing phase jumps, the number of positive smoothing phase jumps being on average equal to that of the negative smoothing phase jumps, and
   - filtration means (2) to filter the clock signal (HL1) thus provided with the preceding phase jumps, and thus to reduce the effects of the quantification of the said phase jump due to the pointer jump,
   the device being characterised in that:
   - it comprises control means (12; 12') to allocate a predetermined duration to the insertion of the said phase jump due to the pointer jump and to break down this predetermined duration into a plurality of periods each corresponding to the transmission of a group of bits, and
   - the said insertion means (12, 13; 12', 13) insert, into the clock signal (H1) corresponding to each of the said groups of bits, a positive phase jump or no phase jump or a negative phase jump depending on whether a binary smoothing law has a transition in one direction, no transition or a transition in the other direction, the said binary law being defined over the said predetermined duration and having transitions sufficient in number for its local average to vary progressively from one of the two possible values of the said binary law to the other of the two possible values, the direction of these variations being linked to the sign of the said phase jump due to the pointer jump.

2. Device according to claim 1, in which the said groups of bits are frames.

3. Device according to claim 1, in which the said groups of bits are rows or lines belonging to frames.

4. Device according to one of claims 1 to 3, in which, when each pointer jump results in an amplitude phase jump corresponding to a plurality of bits, the said control means (12; 12') break down the said phase jump into a plurality of elementary phase jumps of which they increase or decrease the speed of insertion into the clock signal (H1) in a manner adapted to the frequency at which the pointer jumps occur.

5. Device according to claim 4, in which, in order to increase or decrease the insertion speed, the said control means (12) respectively increase or decrease the amplitude of each of the elementary phase jumps.

6. Device according to one of claims 4 or 5, in which, in order to increase or decrease the insertion speed, the said control means (12) respectively decrease or increase the duration allocated to the insertion of each elementary phase jump.

7. Device according to one of claims 3 to 6, in which the said control means (12) increase the insertion speed when a phase jump due to a pointer jump, of the same sign as the preceding one, takes place before the duration necessary for the insertion of this preceding phase jump has elapsed and reduce the insertion speed in the opposite case.

8. Device according to one of claims 3 to 6, in which the said control means (12) determine the duration of an interval of time during which the N last pointer jumps occurred, N being a natural number, and increase or decrease the insertion speed in response to the value of this duration.

9. Device according to one of claims 3 to 6, in which a buffer memory (11) is provided to store the data useful during the processing of the clock signal intended to reduce the jitter thereof, the useful data being written at the rhythm of the clock signal (HE1) before processing and read at the rhythm of the clock signal (HL1) after processing, and the control means (12) simulate the filling of the buffer memory (11) and increase or decrease the insertion speed to keep this filling at an intermediate value.

10. Device according to one of claims 1 to 6, in which the said control means (12') comprise a phase comparator (123) to compare the phase of the clock signal (HE1), before the processing intended to reduce the jitter thereof, to the phase of the clock signal (HL1) after the said processing, a filter (124) to filter the output signal of the said phase comparator (123), integration means (125) to integrate, over a certain duration, the output signal of the said filter (125) and decision means (126) to control the insertion of phase jumps in response to the signal, output from the integrator (125).

**11.** Device according to claim 10, in which the said filter (124) comprises a direct path between its input and its output.

FIG.1a

FIG.1b

FIG.1c

FIG.2

# FIG.3

HE1    HL1

12

121    122

CI

H1

# FIG.4

HL1

131    132    133

CI

ML

AS

H1

FIG. 5

1bit

128 trames

PHASE

1bit
1bit
1bit
1bit
1bit

t

128 trames | 128 trames | 128 trames | 128 trames | 128 trames

EP 0 481 847 B1

17

1 bit

64 trames

FIG.6a

1 bit

64 trames

FIG.6b

HE1    HL1

12´

123

En

124

121

Un

RAZ

125

UAn

126

CI

H1

FIG.7

18

# FIG.8